# FASCICULE DE BREVET EUROPEEN

(11) **EP 0 600 773 B1**
(45) Date de publication et mention de la délivrance du brevet: **23.12.1998**
(21) Numéro de dépôt: 93402866.3
(22) Date de dépôt: 26.11.1993
(51) Int. Cl.: H04Q 7/20, H04Q 7/30

(54) **Procédé de transmission de données entre une station de base d'un système radio-mobile et un transcodeur et station de base correspondante**
Verfahren zur Datenübertragung zwischen einer Basis-Station eines mobilen Funksystems und einem Transcoder und entsprechende Basis-Station
Method for transmitting data between a mobile radio base station and a transcoder and corresponding radio base station

(30) Priorité: 30.11.1992 FR 9214370
(43) Date de publication de la demande: 08.06.1994
(73) Titulaire: ALCATEL ALSTHOM COMPAGNIE GENERALE D'ELECTRICITE, 75008 Paris (FR)
(72) Inventeur: Dupuy, Pierre c/o ALCATEL RADIOTELEPHONE, F-92707 COLOMBES CEDEX (FR)
(74) Mandataire: Pothet, Jean Rémy Emile Ludovic

(56) Documents cités:
- WO-A-91/15087
- COMMUTATION ET TRANSMISSION vol. 13, no. 1 , 1991 , PARIS FR pages 5 - 18 CARRIE ET AL. 'MATRACOM 9200 ET AXE 10 : Un système flexible pour les réseaux GSM'

## Description

La présente invention concerne un procédé d'émission de données. Elle vise également une station d'émission/réception de base mettant en oeuvre ce procédé.

Dans le domaine des radiocommunications numériques avec des mobiles, les données émises par une station mobile (données de parole ou autres) sont reçues par une station d'émission/réception de base (ou station de base) fixe. Le débit des données transmises par voie radio, c'est-à-dire sur l'air, est inférieur à celui des données transmises par voie filaire au sein des différents organes fixes du système de radiocommunications (à titre d'exemple, la parole est transmise sur l'air à plein débit à 13 kbit/s et les données à 12, 6 ou 3,6 kbit/s, et le débit de transmission par voie filaire est de 64 kbit/s). Par conséquent, un transcodeur (appelé dans la norme GSM transcodeur TRAU pour Transcoder/Rate Adaptor Unit ou Unité de Transcodage et d'Adaptation de Débit) est utilisé pour adapter le débit des données transmises sur l'air à celui des données transmises par voie filaire.

Les données sont en général transmises sous forme de trains de trames par une station mobile à une station de base. Après l'activation d'un canal de trafic destiné à transporter de la parole ou des données pour l'échange de données entre la station de base et une station mobile, l'émission des premiers trains de trames de données depuis la station mobile vers la station de base peut entraîner un décalage par rapport à celui correspondant à un régime établi.

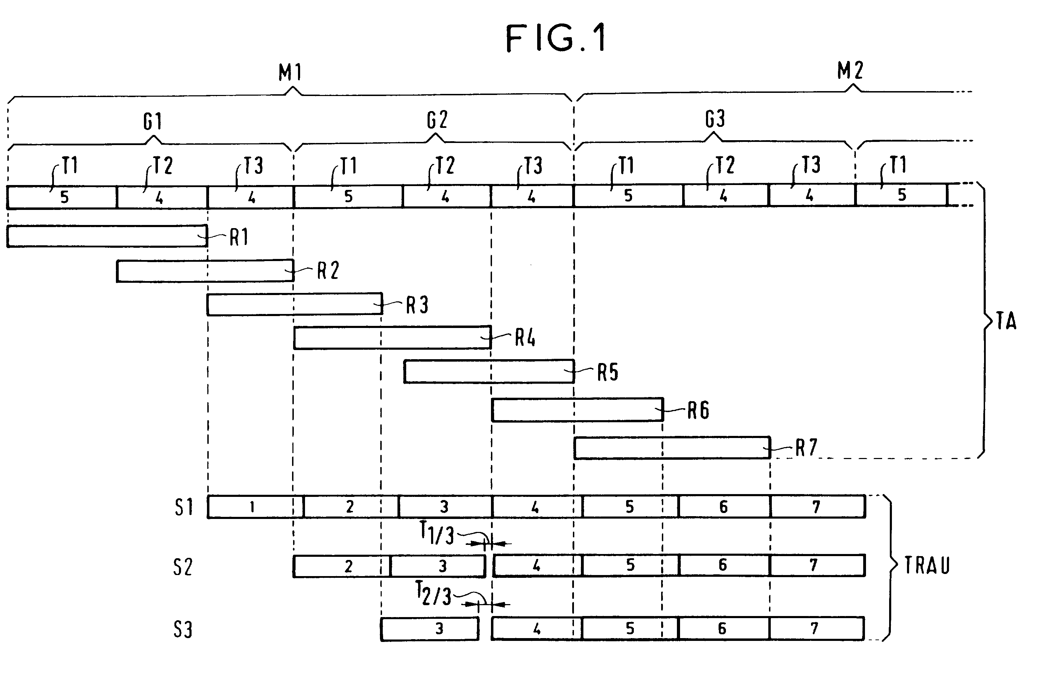

Ce phénomène est illustré dans l'exemple donné à la figure 1, qui montre un chronogramme représentant l'organisation, selon la norme GSM, des trains de trames de données TA (pour Trames Air) tels que préparés par la station mobile en vue de leur émission à destination de la station de base, et celle des trames de données correspondantes TRAU émises par la station de base, après traitement, à destination du transcodeur.

Les trames de données (parole ou autres) à émettre à plein débit par les stations mobiles dans des systèmes conformes à la norme GSM sont initialement agencées en groupes G1, G2, G3, chacun constitué d'un train de cinq trames T1 suivi de deux trains de quatre trames T2 et T3, ces groupes de 13 trames étant répétés périodiquement pour constituer des multitrames M1, M2 comprenant 26 trames chacune (dans les systèmes conformes à la norme GSM). Ces groupes ont été illustrés à la figure 1, dans laquelle des rectangles symbolisent les trains de trames T1, T2, T3, le nombre de trames contenu dans chaque train étant inscrit dans le rectangle correspondant.

La station mobile transmet ces trains de trames sous forme d'une suite continue de trames (non représentée) après entrelacement (interleaving en anglais), c'est-à-dire après combinaison de séquences du type R1 à R7 comprenant chacune deux trains de trames consécutifs et par conséquent 8 ou 9 trames dans le cas des données de parole (pour des données autres que des données de parole, l'entrelacement peut être différent), deux séquences consécutives de l'ensemble R1 à R7 se recouvrant sur une longueur d'un train de trames.

En début de transmission, c'est-à-dire après l'activation d'un canal de transmission entre la station mobile et la station de base, la station mobile ne peut commencer à émettre qu'au début d'un train de type T1, T2 ou T3. A cet effet, son horloge interne est synchronisée avec celle de la station de base.

Si la station mobile commençait à émettre à n'importe quel moment, la station de base ne serait pas capable de reconstituer, à partir des données reçues, les trains de trames initiaux tels qu'ils apparaissent au niveau de la station mobile avant entrelacement, et serait donc incapable d'exploiter les données transmises.

A partir des trains de trames reçus de la station mobile, la station de base reconstitue la structure initiale avec les groupes de trames initiaux G1, G2, G3, et transmet à son tour ces données au transcodeur par paquets de 20 ms constituant des trames dites trames TRAU, et ce en commençant dès la fin de la réception d'une première séquence de 8 ou 9 trames après activation du canal (on rappelle que 20 ms est la durée des paquets de données utilisés dans les réseaux filaires).

Or, dans la norme GSM, une durée de 20 ms correspond à celle de quatre trames et un tiers de trame. Ainsi, en début de transmission, une des trois situations suivantes est rencontrée :
- si la première trame TA reçue et identifiée (c'est-à-dire reconnue après reconstitution de la structure initiale) par la station de base après l'activation d'un canal de réception sur l'air appartient à une séquence du type R1, R4 ou R7, ou plus généralement R(3n+1), c'est-à-dire qu'elle est la première trame d'un train T1, un train de trames TRAU du type S1 est émis par la station de base à destination du transcodeur, et il n'apparaît aucun "trou" dans la transmission ;
- si la première trame TA reçue et identifiée après activation appartient à une séquence du type R2 ou R5, ou plus généralement R(3n+2), c'est-à-dire qu'elle est la première trame d'un train T2, un train de trames TRAU du type S2 est émis par la station de base à destination du transcodeur, et il apparaît alors un "trou" T_{1/3} d'un tiers de trame, pendant lequel la station de base ne transmet pas de données utiles au transcodeur, entre la troisième trame et la quatrième trame ;
- si la première trame TA reçue et identifiée après activation appartient à une séquence du type R3 ou R6, ou plus généralement R(3n+3), c'est-à-dire qu'elle est la première trame d'un train T3, un train de trames TRAU du type S3 est émis par la station de base, et il apparaît un "trou" T_{2/3} de deux tiers de trame entre la troisième et la quatrième trame.

Ce phénomène provient du fait que les trames de données ne sont pas nécessairement émises sur l'air par les stations mobiles immédiatement après l'activation d'un canal de réception, et se traduit en pratique, dans les systèmes conformes à la norme GSM, par une absence de données transmises au transcodeur pendant 1,5 ou 3 ms.

On comprend bien en outre que ce phénomène ne se produit qu'en début de transmission, et qu'au bout d'un certain temps (60 ms dans l'exemple donné en figure 1), les "trous" de transmission sont compensés.

Dans le cas où les données transmises sont des données de parole, la présence de ces "trous" dans la transmission initiale augmente le temps nécessaire à la synchronisation du transcodeur avec la station de base. Pendant ce temps, soit la parole est inintelligible, soit il est nécessaire d'en faire une extrapolation. Ceci est bien sûr peu souhaitable. Le problème se pose de manière identique en transmission à plein débit ou à demi-débit de données de parole.

Dans le cas où les données transmises sont des données autres que de la parole, il est interdit notamment par la norme GSM, de ne pas transmettre de données ou transcodeur lors de "trous" dans la réception en provenance de la station mobile ; une solution connue pour pallier le problème posé consiste alors à insérer des trames de remplissage (constituées par exemple de suites de 1) en attendant la trame suivante, ce qui conduit à un retard supplémentaire de 17 à 20 ms. Cette solution, si elle est peu avantageuse dans la transmission à plein débit car pénalisante en termes de délais de transmission, n'est absolument pas envisageable dans la transmission à demi-débit notamment de données autres que de la parole, pour laquelle il est prévu que la station de base transmette au transcodeur des paquets ayant une durée de 40 ms et non plus de 20 ms. En effet, dans le cas d'une séquence du type R(3n+3), un "trou" apparaîtrait alors en milieu d'un paquet de données ; le remplissage n'est pas envisageable dans ce cas puisque les bits de remplissage, apparaissant au milieu des paquets, seraient pris pour des bits de données.

Le même problème pourrait se poser dans le cas de la transmission de la parole à demi-débit, au cas où des paquets de parole de durée supérieure à 20 ms seraient envoyés par la station de base.

Le but de l'invention est de remédier aux inconvénients des procédés connus d'émission de données à destination d'un transcodeur en proposant un procédé d'émission de trames de données vers un transcodeur qui permette de réduire la durée de synchronisation du transcodeur, d'éviter d'introduire des délais supplémentaires dans la transmission, et enfin de pallier le problème des "trous" de transmission apparaissant au milieu d'un paquet de données transmis au transcodeur par la station de base lorsque la durée de ce paquet est supérieure à celle des paquets utilisés dans les réseaux filaires.

La présente invention propose à cet effet un procédé d'émission de données par une station d'émission/réception de base, dite station de base, à destination d'un transcodeur, lesdites données, initialement émises à destination de ladite station de base, étant, avant leur émission à destination dudit transcodeur, organisées en trames rassemblées en trains d'au moins une trame chacun, lesdits trains étant eux-mêmes rassemblés en groupes, l'émission desdites données à destination de ladite station de base débutant au début d'un train de trames, caractérisé en ce qu'il comprend les opérations suivantes :
- après activation d'un canal de la station de base pour la réception desdites trames de données, le premier train de trames reçu sur ce canal par ladite station de base est associé à un numéro de référence à l'intérieur du groupe de trames correspondant,
- l'émission de données par ladite station de base vers ledit transcodeur est ensuite retardée d'une durée fonction du numéro de référence dans ledit groupe de trames dudit premier train de trames, de sorte qu'un train continu de données est émis par ladite station de base à destination dudit transcodeur.

Ainsi, avec le procédé selon l'invention, le problème de synchronisation précité ne peut plus se produire. En effet, dès que la station de base commence à émettre, elle émet un train continu de données à destination du transcodeur ; ce train ne devra être modifié qu'en cas de glissement des horloges de la station de base par rapport à celle d'une interface entre ladite station de base et un contrôleur de station de base.

Les procédures de synchronisation initiales effectuées par le transcodeur sont ainsi minimisées, ce qui conduit à une meilleure qualité de la parole dans les cas de démarrage du transcodeur lors d'une procédure d'accès d'une station mobile ou après un handover. Pour ce qui est de la transmission de données de parole, le problème posé par les procédés de l'art antérieur est donc résolu.

De manière générale, grâce à l'invention, lorsque des données sont transmises à plein débit, le fait d'émettre un train continu évite d'avoir à utiliser des bits de remplissage et permet d'éviter l'introduction de délais de transmission supplémentaires ; lorsque la transmission est effectuée à demi-débit, les paquets transmis par la station de base au transcodeur ayant alors en général une durée plus longue que celle des paquets utilisés dans les réseaux filaires, le fait d'émettre un train continu de données résout le problèmes des "trous" apparaissant au milieu d'un paquet.

Une station d'émission/réception de base, ou station de base, pour la mise en oeuvre du procédé selon l'invention comprend des moyens de réception pour recevoir des données, des moyens pour identifier lesdits trains de trames à partir desdites données, et est reliée au transcodeur via des moyens d'interface numérique ; elle est caractérisée en ce qu'elle comprend en outre des moyens pour retarder l'émission des données vers ledit transcodeur d'un retard fonction d'un numéro de référence correspondant audit premier train de trames identifié d'après les données reçues après activation d'un canal de réception au niveau de ladite station d'émission/réception de base.

D'autres caractéristiques et avantages de la présente invention apparaîtront dans la description ci-après.

Dans les dessins annexés donnés à titre d'exemples illustratifs et nullement limitatifs :
- la figure 1 est un chronogramme représentant l'organisation des trames de données telles qu'elles sont préparées par une station mobile en vue de l'émission à destination d'une station de base, ainsi que l'organisation des données émises à destination d'un transcodeur après traitement par la station de base selon un procédé de l'art antérieur,

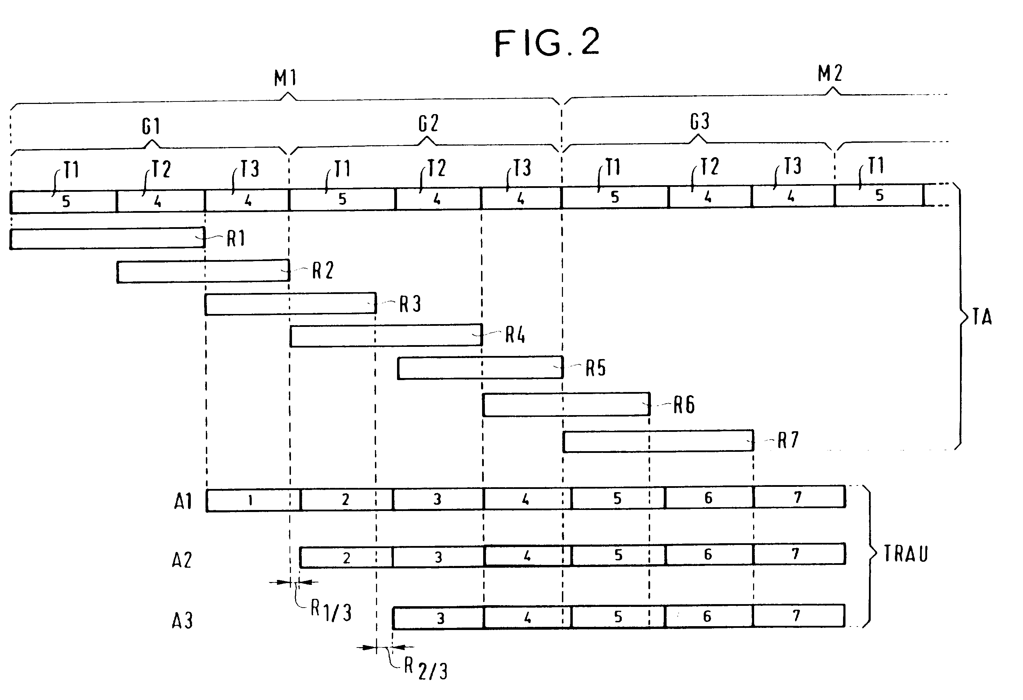

- la figure 2 est un chronogramme représentant l'organisation des trames de données telles qu'elles sont préparées par une station mobile en vue de l'émission à destination d'une station de base, ainsi que l'organisation des données émises à destination d'un transcodeur après traitement par la station de base selon le procédé de l'invention,

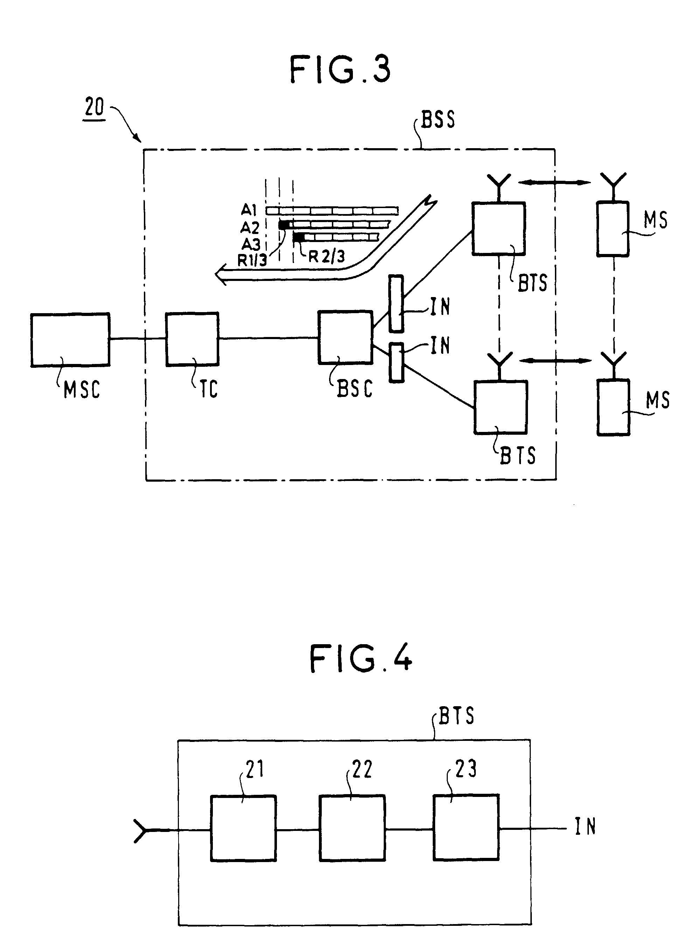

- la figure 3 est un schéma synoptique illustrant un système de radiocommunications mobiles comprenant des stations d'émission/réception de base mettant en oeuvre le procédé selon l'invention,
- la figure 4 représente en détail les moyens inclus dans une station de base selon l'invention telle que représentée en figure 3 et servant à la mise en oeuvre du procédé selon l'invention, les autres moyens classiques présents à l'intérieur d'un station de base n'étant pas représentés dans cette figure.

Dans toutes ces figures, les éléments communs portent les mêmes numéros de référence.

La figure 1 a été décrite lors de la présentation de l'état de la technique.

Les "trous" T_{1/3} et T_{2/3} présents dans les situations d'émission S2 et S3 de l'art antérieur (voir figure 1) sont supprimés avec le procédé d'émission selon l'invention. En effet, les délais correspondants sont reportés en début d'émission sous la forme de retards initiaux dépendant du rang dans le groupe de trames correspondant du premier train de trames identifié par la station de base à partir des données reçues après l'activation d'un canal de réception.

En référence à l'ensemble de trains de trames TRAU A1 à A3 représentées en figure 2, correspondant respectivement aux trains S1 à S3 de la figure 1, on obtient avec le procédé selon l'invention les situations suivantes:
- si la première trame TA reçue et identifiée après l'activation appartient à une séquence du type R1, R4,..., R(3n+1) (n entier positif ou nul), c'est-à-dire que le premier trains de trames reçu et identifié est un train du type T1, la station de base émet à destination du transcodeur un train de trames TRAU de type A1, sans retard initial,
- si la première trame TA reçue et identifiée après activation appartient à une séquence du type R2, R5,..., R(3n+2), c'est-à-dire que le premier trains de trames reçu et identifié est un train du type T2, la station de base émet un train de trames TRAU de type A2, avec un retard initial R_{1/3} d'un tiers de trame,
- si la première trame TA reçue et identifiée après activation appartient à une séquence du type R3, R6,..., R(3n+3), c'est-à-dire que le premier trains de trames reçu et identifié est un train du type T3, la station de base émet un train de trames TRAU de type A3, avec un retard initial R_{2/3} de deux tiers de trame.

On précise que :
- la station de base identifie le premier train de trames reçu après avoir traité les données reçues de manière à reconstituer la structure initiale avec les groupes de trames organisés par la station mobile avant entrelacement,
- la station de base est capable de déterminer, après réception des données émises par la station mobile et reconstitution de la structure initiale avant entrelacement, par quel train de trames (T1, T2 ou T3) l'émission de la station mobile a débuté, c'est-à-dire qu'elle peut déterminer le rang du premier train de trames à l'intérieur du groupe de trames correspondant grâce au fait que son horloge interne est synchronisée avec celle de la station mobile.

Avec le procédé selon l'invention, dans l'exemple illustré, on obtient donc un ensemble de trains de données TRAU possibles A1, A2, A3 pour l'émission par la station de base à destination du transcodeur, ces trains de données étant retardés respectivement de 0 trame, d'un tiers de trame et de deux tiers de trame en fonction du rang du premier train de trames reçu après activation. On observe qu'il n'y a plus alors d'interruption de la suite de données transmises au transcodeur, qui est ainsi un train continu de données.

Le procédé d'émission de trames selon l'invention peut avantageusement être utilisé au sein d'un système de communication 20 du type de celui décrit très schématiquement en figure 3. Ce système comporte des stations d'émission/réception de base BTS émettant des données vers un transcodeur TC, les stations de base BTS et la transcodeur TC appartenant à un sous-système de station de base BSS associé d'une part, en amont à un centre de commutation mobile MSC via des liaisons numériques à haut débit (par exemple 64 kbit/s), et d'autre part, en aval, à un ensemble de stations mobiles MS via des liaisons radio.

Plus précisément, une station de base BTS comporte des moyens de réception 21 (voir figure 4) pour recevoir les données émises par les stations mobiles MS, des moyens 22 pour identifier les trains de trames à partir des données reçues par les moyens de réception 21, et des moyens 23 pour retarder l'émission des données vers le transcodeur TC d'un retard fonction d'un numéro de référence correspondant au premier train de trames identifié d'après les données reçues après activation d'un canal de réception.

Le transfert de données depuis une station de base BTS vers un transcodeur TC est réalisé à travers un contrôleur de station de base BSC qui contrôle plusieurs stations de base, via des interfaces numériques de communication IN, par exemple à un débit de 13 kbit/s (plein débit) ou de 6,5 kbit/s (demi-débit).

Bien sûr, l'invention n'est pas limitée aux exemples qui viennent d'être décrits et de nombreux aménagements peuvent être apportés à ces exemples sans sortir du cadre de l'invention.

Ainsi, le procédé selon l'invention peut être appliqué dans le cadre d'autres systèmes de radiocommunication numériques que ceux conformes à la norme GSM citée dans la présente description.

Par ailleurs, le procédé de l'invention s'applique à la transmission de données quelles qu'elles soient (parole ou autres), à plein débit ou à demi-débit.

Il n'est pas nécessaire, pour l'application du procédé selon l'invention, que la station mobile effectue un entrelacement des trames avant de les émettre.

Il n'est pas non plus nécessaire que les trames soient regroupées à la façon décrite, qui correspond à l'exemple particulier du système GSM. Notamment, on entend en général par train de trames un ensemble de trames, cet ensemble contenant au moins une trame.

Enfin, on pourra remplacer tout moyen par un moyen équivalent sans sortir du cadre de l'invention.

## Revendications

1. Procédé d'émission de données par une station d'émission/réception de base, dite station de base, à destination d'un transcodeur, lesdites données, initialement émises à destination de ladite station de base, étant, avant leur émission à destination dudit transcodeur, organisées en trames rassemblées en trains (T1, T2, T3) d'au moins une trame chacun, lesdits trains étant eux-mêmes rassemblés en groupes (G1, G2, G3), l'émission desdites données à destination de ladite station de base débutant au début d'un train (T1, T2, T3) de trames, caractérisé en ce qu'il comprend les opérations suivantes :
- après activation d'un canal de la station de base pour la réception desdites trames de données, le premier train de trames (T1, T2, T3) reçu sur ce canal par ladite station de base est associé à un numéro de référence à l'intérieur du groupe de trames correspondant (G1, G2, G3),
- l'émission de données par ladite station de base vers ledit transcodeur est ensuite retardée d'une durée (R_{1/3}, R_{2/3}) fonction du numéro de référence dans ledit groupe de trames dudit premier train de trames, de sorte qu'un train continu (A1, A2, A3) de données est émis par ladite station de base à destination dudit transcodeur.

2. Station d'émission/réception de base, ou station de base, pour la mise en oeuvre du procédé selon la revendication 1, comprenant des moyens de réception (21) pour recevoir des données, des moyens (22) pour identifier lesdits trains de trames à partir desdites données, et étant reliée au transcodeur (TC) via des moyens d'interface numérique (IN), caractérisée en ce qu'elle comprend en outre des moyens (23) pour retarder l'émission des données vers ledit transcodeur (TC) d'un retard fonction d'un numéro de référence correspondant audit premier train de trames (T1, T2, T3) identifié d'après les données reçues après activation d'un canal de réception au niveau de ladite station d'émission/réception de base (BTS).

## Patentansprüche

1. Verfahren zum Senden von Daten durch eine Sende-/Empfangs-Basisstation, als Basisstation bezeichnet, an einen Transcoder, bei dem die ursprünglich an die Basisstation gesendeten Daten vor ihrem Senden an den Transcoder in Rahmen organisiert werden, die zu Zügen (T1, T2, T3) von jeweils wenigstens einem Rahmen zusammengefügt werden, wobei die Züge ihrerseits zu Gruppen (G1, G2, G3) zusammengefügt werden, und das Senden der Daten an die Basisstation mit dem Beginn eines Zuges (T1, T2, T3) von Rahmen beginnt,
dadurch gekennzeichnet, daß es folgende Operationen umfaßt:
- nach dem Aktivieren eines Kanals der Basisstation zum Empfangen der Datenrahmen wird dem ersten auf dem Kanal durch die Basisstation empfangenen Zug (T1, T2, T3) von Rahmen eine Referenznummer innerhalb der entsprechenden Gruppe von Rahmen (G1, G2, G3) zugeordnet,
- das Senden von Daten durch die Basisstation an den Transcoder wird anschließend um eine Zeitdauer (R_{1/3}, R_{2/3})verzögert, die von der Referenznummer des ersten Zuges von Rahmen in der ersten Gruppe von Rahmen abhängt, so daß ein kontinuierlicher Zug (A1, A2, A3) von Daten durch die Basisstation an den Transcoder gesendet wird.

2. Sende-/Empfangs-Basisstation oder Basisstation für die Ausführung des Verfahrens nach Anspruch 1 mit Empfangsmitteln (21) zum Empfangen von Daten, Mitteln (22) zum Identifizieren der Züge von Rahmen anhand der Daten, die mit dem Transcoder (TC) über digitale Schnittstellenmittel (IN) verbunden ist, dadurch gekennzeichnet, daß sie ferner Mittel (23) umfaßt zum Verzögern des Sendens der Daten an den Transcoder (TC) um eine Verzögerung, die von einer Referenznummer abhängt, die dem ersten Zug (T1, T2, T3) von Rahmen entspricht, der anhand der nach Aktivierung eines Empfangs kanals an der Sende-/Empfangs-Basisstation (BTS) empfangenen Daten identifiziert wird.

## Claims

1. Method of transmitting data from a base transceiver station or base station to a transcoder, said data, initially transmitted to said base station, being prior to its transmission to said transcoder organised in frames assembled in streams (T1, T2, T3) each including at least one frame, said streams being in turn assembled into groups (G1, G2, G3), the transmission of said data to said base station starting at the start of a stream of frames (T1, T2, T3),
characterised in that it comprises the following operations:
- after activation of a channel of the base station for reception of said data frames, the first stream of frames (T1, T2, T3) received on said channel by said base station is associated with a reference number within the corresponding group of frames (G1, G2, G3),
- transmission of data by said base station to said transcoder is then delayed by an amount (R_{1/3}, R_{2/3}) depending on the reference number in said group of frames of said first stream of frames, whereby a continuous stream of data (A1, A2, A3) is transmitted by said base station to said transcoder.

2. Base transceiver station or base station for implementing the method according to claim 1 comprising receive means (21) for receiving data, means (22) for identifying said streams of frames from said data and connected to the transcoder (TC) via digital interface means (IN), characterised in that it further comprises means (23) for delaying the transmission of data to said transcoder (TC) by a time-delay depending on a reference number corresponding to said first stream of frames (T1, T2, T3) identified from the data received after activation of a receive channel at said base transceiver station (BTS).
